# EUROPÄISCHE PATENTANMELDUNG

(11) **EP 1 691 321 A1**
(43) Veröffentlichungstag der Anmeldung: **16.08.2006**
(21) Anmeldenummer: 05002647.5
(22) Anmeldetag: 09.02.2005
(51) Int. Cl.: G06Q 10/00

(54) **Transaktionssystem zum Verarbeiten von Transaktionsinformationen und Verfahren zur Durchführung von Transaktionen**

(71) Anmelder: Deutsche Post AG, 53113 Bonn (DE)
(72) Erfinder: Kranz, Jürgen, 50374 Erftstadt (DE); Westerweller, Jörg, 51570 Windeck/Rosbach (DE)
(74) Vertreter: Jostarndt, Hans-Dieter

(57) **Zusammenfassung**

Die Erfindung betrifft ein Transaktionssystem zum Verarbeiten von Transaktionsinformationen von wenigstens einem Leistungserbringer, mit einem Mittel zum Erfassen von Abrechnungsdaten.

Erfindungsgemäß zeichnet sich das Transaktionssystem dadurch aus, dass das Transaktionssystem wenigstens ein Vorgangsbearbeitungsmodul (VGA) enthält, wobei das Vorgangsbearbeitungsmodul einen Datencontainer enthält, in dem die Abrechnungsdaten gespeichert werden und dass das Vorgangsbearbeitungsmodul (VGA) über eine Schnittstelle mit wenigstens einem Datenmodul verbunden ist.

## Beschreibung

Die Erfindung betrifft ein Transaktionssystem zum Verarbeiten von Transaktionsinformationen von wenigstens einem Leistungserbringer mit einem Mittel zum Erfassen von Abrechnungsdaten.

Die Erfindung betrifft ferner ein Verfahren zur Durchführung von Transaktionen.

Ein gattungsgemäßes Transaktionssystem sowie ein gattungsgemäßes Verfahren sind aus der Europäischen Patentschrift EP 0 938 715 B1 sowie ihrer deutschen Übersetzung DE 697 07 009 T2 bekannt.

Das gattungsgemäße Transaktionssystem sieht eine Umgebung zum Verarbeiten von Transaktionsinformationen mehrerer Absender und Versandunternehmen vor. Dieses bekannte Transaktionssystem weist einen zentralen Prozessor auf, der auf Transaktionsinformationen anspricht, Berechtigungsprofilkriterien abspeichert und feststellt, ob die Transaktionsinformationen den Berechtigungsprofilkriterien entsprechen, wobei die Berechtigungsprofilkriterien Informationen über autorisierte Benutzer enthalten.

Es ist wünschenswert, ein Transaktionssystem bereitzustellen, das sowohl einen möglichst geringen Aufwand erfordert als auch eine schnelle und zeitnahe Abrechnung von Leistungen ermöglicht.

Der Begriff Leistungen ist in keiner Weise einschränkend zu verstehen. Der Begriff Leistungen umfasst sowohl jegliches zur Verfügungstellen von Waren, sei es durch Verkauf, Vermietung oder Verpachtung, jegliche Form von Dienstleistungen sowie auch virtuelle Dienstleistungen wie Zugang zu Kommunikationssystemen und Informationen.

Der Begriff Leistungserbringer ist gleichfalls in allgemeiner Weise zu verstehen und umfasst jegliche Einheit, welche in der Lage ist, die zuvor genannten Leistungen zu erbringen. Insbesondere kann der Leistungserbringer sowohl eine physische Einheit sein, beispielsweise ein Verkaufsautomat für Waren oder Dienstleistungen, oder eine organisatorische Einheit, beispielsweise ein Dienstleistungsunternehmen oder eine Filiale eines vorzugsweise mehrere Filialen umfassenden Unternehmens.

Erfindungsgemäß wird ein Transaktionssystem nach Anspruch 1 bereitgestellt.

Eine besonders bevorzugte Ausführungsform der Erfindung sieht vor, ein Transaktionssystem zum Verarbeiten von Transaktionsinformationen von wenigstens einem Leistungserbringer mit einem Mittel zum Erfassen von Rechnungsdaten so auszugestalten, dass das Transaktionssystem wenigstens ein Vorgangsbearbeitungsmodul enthält, wobei das Vorgangsbearbeitungsmodul mit einem Context-Manager verbunden ist, wobei der Context-Manager so ausgebildet ist, dass er mit mindestens einem Vorgangsbearbeitungsmodul und mit mehreren Dienstkomponenten verbunden ist.

Die Erfindung beinhaltet ferner ein Verfahren zur Durchführung von Transaktionen.

Die Erfindung eignet sich für einen Einsatz bei beliebigen Transaktionen. Erfindungsgemäße Transaktionen umfassen sowohl konventionelle Transaktionen, bei denen eine Abfolge von Operationen nur komplett oder gar nicht durchgeführt wird, als auch neuartige Transaktionstypen, bei denen nur eine Bereitstellung von Informationen und/oder eine Durchführung von Funktionen erfolgt. Es ist ein Vorteil des erfindungsgemäßen Transaktionssystems, dass es sich sowohl bei konventionellen Transaktionen als auch bei nicht-konventionellen Transaktionen einsetzen lässt.

Ein Einsatz der Erfindung bei konventionellen Transaktionen ist vorteilhaft, wenn eine Vollständigkeit von Transaktionen sichergestellt werden muss. In diesem Fall werden transaktionale Änderungen an Datenbeständen erst dauerhaft gespeichert, wenn die Transaktion vollständig durchlaufen ist.

Ferner lässt sich das erfindungsgemäße Transaktionssystem jedoch auch für die erfindungsgemäß mit umfassten nicht-konventionellen Transaktionen einsetzen, bei denen keine gemeinsame Folge von Verarbeitungsschritten erforderlich ist. Ein Beispiel hierfür ist eine Kontostandsabfrage, bei der keine Veränderung des Datenbestandes erfolgt. Insbesondere umfassen die erfindungsgemäßen Transaktionen sowohl sämtliche Arten der Darstellung von Informationen / der Durchführung von Funktionen sowie datenverändernde und nicht datenverändernde Vorgänge. Ferner sind sowohl statuslose als auch statusbehaftete Transaktionen umfasst.

Vorteilhafte Weiterbildungen des Transaktionssystems sind in der nachfolgenden Beschreibung offenbart und Gegenstand der Patentansprüche 2 bis 7.

Die Erfindung ermöglicht vielfache Ausgestaltungen von Transaktionssystemen. Ausführungsformen mit einer dezentralisierten Datenspeicherung sind wegen einer Erhöhung der Flexibilität und der Ausfallsicherheit besonders bevorzugt.

Durch eine Datenspeicherung innerhalb der Vorgangsbearbeitungsmodule wird sichergestellt, dass die Vorgangsbearbeitungsprozessoren jeweils unmittelbar auf die für die Vorgangsbearbeitung erforderlichen Daten zugreifen können.

Eine besonders bevorzugte Ausführungsform der Erfindung zeichnet sich dadurch aus, dass in dem Vorgangsbearbeitungsmodul ein Datencontainer zum Speichern des Datenobjekts erzeugt wird.

Insbesondere ist es zweckmäßig, dass die Datenobjekte den Wert der Daten enthalten.

Vorteilhaft weist das Vorgangsbearbeitungsmodul neben einer oder mehreren Komponenten zur Erfassung und/oder Bearbeitung einen Datencontainer zum Speichern von Datenobjekten auf, die insbesondere den Wert der Daten enthalten. Der Datenbestand des Vorgangsbearbeitungsmoduls, der in Form der Datenobjekte vorliegt, kann somit in einfacher Weise gespeichert und, etwa nach einem Systemabsturz, wiederhergestellt werden.

Eine besonders umfassende Datensicherung sowie eine besonders einfache und zuverlässige Datenwiederherstellung lassen sich in einer besonders bevorzugten Ausführungsform der Erfindung dadurch erzielen, dass jedem Datenelement, das von dem Vorgangsbearbeitungsmodul erfasst und/oder verarbeitet wird, ein Datenobjekt zugeordnet wird.

Die Ausführungen für Daten gelten auch für einzelne Datenelemente. Die Verwendung der Pluralform "Daten" stellt keine Festsetzung dar, sondern schließt jeweils ausdrücklich auch den Fall ein, dass es sich um ein einzelnes Datenelement handelt.

Der Datencontainer enthält damit den gesamten "Zustand" eines Vorgangs. Der vollständige Vorgang kann somit besonders einfach gesichert und gegebenenfalls wiederhergestellt werden. Zur weiteren Erhöhung der Datensicherheit ist es zweckmäßig, dass die Datenobjekte neben den Daten zudem Eigenschaften der Daten enthalten, welche vorzugsweise Beschränkungen zugelassener Werte beschreiben. Dabei kann es sich bei Daten in einem Zahlenformat beispielsweise um Wertebereiche oder vorgegebene diskrete Zahlenwerte handeln oder es kann eine vorgegebene Minimal und/oder Maximallänge einer Zeichenkette angegeben werden.

Das Datenbearbeitungsmodul kann damit schnell und einfach an geänderte Bedingungen angepasst werden, indem die in den Datenobjekten hinterlegten Eigenschaften angepasst werden.

Anhand der in dem Datencontainer enthaltenen Datenobjekte kann auch das Verhalten des Vorgangs vorgegeben werden. Die Konfiguration des Verhaltens ist somit weitgehend von Einstellungen in der Funktionseinheit des Vorgangsbearbeitungsmoduls entkoppelt, so dass die Funktionseinheit in hohem Maße auf Standardoperationen zurückgreifen kann, die für eine Vielzahl von Vorgängen durchgeführt werden.

Die Erfassung von Daten lässt sich innerhalb des Vorgangsbearbeitungsmoduls dadurch realisieren, dass Werte von bestehenden Datenobjekten verändert werden. Gleichfalls ist es jedoch auch möglich, neue Datenobjekte anzulegen und Werte in diese einzutragen. Zur Anzeige von Daten kann ebenfalls auf die Werte des Datencontainers zugegriffen werden.

Es ist besonders vorteilhaft, dass das Verfahren in einem Netzwerk erfolgt, das mehrere Vorgangsbearbeitungsmodule enthält, wobei die Vorgangsbearbeitungsmodule mit einem Context-Manager verbindbar sind, wobei der Context-Manager so ausgebildet ist, dass er mit mindestens einem Vorgangsbearbeitungsmodul und mit mehreren Dienstkomponenten verbunden ist.

Eine besonders bevorzugte Ausführungsform der Erfindung zeichnet sich dadurch aus, dass der Context-Manager sowohl als zentrales Steuerungsmittel für die Vorgangsbearbeitungsmodule als auch als zentraler Dienstanbieter für die Vorgangsbearbeitungsmodule ausgebildet ist.

Ferner ist es zweckmäßig, dass der Context-Manager mit einer Schnittstelle ISupportService verbunden ist, und dass die Schnittstelle so ausgebildet ist, dass sie eine Abfrage des Vorhandenseins von angebundenen Dienstkomponenten ermöglicht.

Eine besonders bevorzugte Ausführungsform der Erfindung zeichnet sich dadurch aus, dass eine Datenübermittlung durch eine Benachrichtigungskomponente erfolgt.

Hierbei ist es besonders vorteilhaft, dass die Benachrichtigungskomponente ein Auswahlmodul zur Auswahl von Übertragungswegen zum Übermitteln der Benachrichtigungen enthält.

Es ist besonders zweckmäßig, das Verfahren so durchzuführen, dass ein Ablaufplan des Vorgangsbearbeitungsmoduls in einer Konfigurationsdatei hinterlegt wird, welche beim Start eines Vorgangsbearbeitungsmoduls eingelesen wird.

Durch die unmittelbare Zuordnung von Daten zu den Vorgangsbearbeitungsmodulen ist es ferner möglich, dass neue Module hinzugefügt werden können beziehungsweise dass einzelne Vorgangsbearbeitungsmodule entfernt werden können, ohne dass die Funktionsfähigkeit anderer Vorgangsbearbeitungsmodule beeinträchtigt wird.

In einer besonders bevorzugten Ausführungsform der Erfindung sind die Vorgangsbearbeitungsmodule mit wenigstens einem weiteren Datenmodul verbunden.

Das weitere Datenmodul enthält vorzugsweise solche Daten, die für eine Datenbearbeitung in mehreren Vorgangsbearbeitungsmodulen eingesetzt werden können.

Mit Hilfe einer Rohdatenkomponente erzeugt die Vorgangsart Rohdatensätze. Der Context-Manager dient als Mittler, er gibt die Dienste der Rohdatenkomponente über die Schnittstelle IRDSManager an die Vorgangsart weiter.

Ein Rohdatensatz besteht vorzugsweise aus mehreren, insbesondere zwei Teilen. Das ist auf der einen Seite der so genannte feste Rahmen und auf der anderen Seite der Geschäftsvorfall. Der Rahmen ist von seiner Struktur her statisch. In diesem Teil sind die technischen und fachlichen Daten untergebracht, die über alle Rohdatensätze gesehen relevant sind. Im Rahmen befindet sich das Element Geschäftsvorfall. Der Geschäftsvorfall enthält die fachlichen Daten, die von Geschäftsvorfalltyp zu Geschäftsvorfalltyp variieren.

Die Datenkomponente stellt vorzugsweise eine Komponente eines Frameworks dar, welche von anderen Komponenten genutzt werden kann. Beispielsweise kann die Datenkomponente von der Rohdatenkomponente genutzt werden, welche die erste Erfassung von Datenmaterial in Form einer Urliste (raw data) verarbeitet.

Ferner ist es zweckmäßig, dass das Transaktionssystem ein Steuerungsmodul enthält, das so ausgestaltet ist, dass es den Datencontainer aktivieren und/oder deaktivieren kann.

Das Vorgangsbearbeitungsmodul ist erfindungsgemäß so ausgebildet, dass es wenigstens eine Komponente zum Erfassen und/oder Bearbeiten von Daten und einen Datencontainer aufweist, wobei der Datencontainer Datenobjekte umfasst, die veränderbare Werte und vorgegebene Eigenschaften von Daten enthalten.

Unter einem Vorgangsbearbeitungsmodul wird dabei ein Modul verstanden, welches zur Bearbeitung von Vorgängen verwendet wird, die Prozesse, wie beispielsweise Geschäftsprozesse, abbilden. Das Datenverarbeitungsmodul kann dabei beispielsweise ein Bestandteil eines Computerprogramms zur Bearbeitung eines oder mehrerer Prozesse oder als eigenständiges Computerprogramm realisiert sein.

Vorteilhaft weist das Vorgangsbearbeitungsmodul neben einer oder mehreren Komponenten zur Erfassung und/oder Bearbeitung einen Datencontainer zum Speichern von Datenobjekten auf, die insbesondere den Wert der Daten enthalten. Der Datenbestand des Vorgangsbearbeitungsmoduls, der in Form der Datenobjekte vorliegt, kann somit in einfacher Weise gespeichert und, etwa nach einem Systemabsturz, wiederhergestellt werden.

In einer bevorzugten Ausführungsform der Erfindung ist es dabei vorgesehen, dass die Datenobjekte jeweils einem Datenfeld zugeordnet sind, das innerhalb einer grafischen Benutzeroberfläche auf einem Anzeigemittel darstellbar ist.

Eine weitere bevorzugte Ausführungsform eines erfindungsgemäßen Transaktionssystems zeichnet sich dadurch aus, dass die Benachrichtigungskomponente ein Auswahlmodul zur Auswahl von Übertragungswegen zum Übermitteln der Benachrichtigungen enthält.

Eine besonders bevorzugte Ausführungsform dieses Transaktionssystems zeichnet sich dadurch aus, dass es einen Session-Manager enthält, wobei der Session-Manager ein Modul zur Verwaltung zusammenhängender Rohdatensätze enthält.

Ferner ist es vorteilhaft, dass der Session-Manager mit einer Rohdatenkomponente verbunden ist.

Eine besonders bevorzugte Ausführungsform der Erfindung zeichnet sich dadurch aus, dass der Context-Manager sowohl als zentrales Steuerungsmittel für die Vorgangsbearbeitungsmodule als auch als zentraler Dienstanbieter für die Vorgangsbearbeitungsmodule ausgebildet ist. Insbesondere startet, pausiert und beendet der Context-Manager die Vorgangsbearbeitungsmodule.

Zweckmäßigerweise wird das Transaktionssystem so ausgestaltet, dass der Context-Manager mit einer Schnittstelle ISupportService (ISS) verbunden ist, wobei die Schnittstelle so ausgebildet ist, dass sie eine Abfrage des Vorhandenseins von angebundenen Dienstkomponenten ermöglicht.

Ferner ist es vorteilhaft, dass das Transaktionssystem eine Benachrichtigungskomponente (KISS) aufweist, wobei die Benachrichtigungskomponente (KISS) ein Übermitteln von Daten ermöglicht.

Eine besonders zweckmäßige Ausführungsform der Erfindung zeichnet sich dadurch aus, dass die Benachrichtigungskomponente ein Auswahlmodul zur Auswahl von Übertragungswegen zum Übermitteln der Benachrichtigungen enthält.

Hierdurch ist es möglich, unterschiedlichen Typen von Benachrichtigungen unterschiedliche Übertragungswege zuzuordnen und so Übertragungskapazitäten besonders wirksam zu nutzen.

Ferner ist es zweckmäßig, dass der Context-Manager so ausgestaltet ist, dass er eine Datenübertragung zwischen dem Session-Manager und der Rohdatenkomponente steuern kann.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Figuren.

Von den Figuren zeigt
- Fig. 1: eine Prinzipdarstellung eines erfindungsgemäßen Transaktionssystems;
- Fig. 2: eine Prinzipdarstellung von besonders bevorzugten Bestandteilen des erfindungsgemäßen Transaktionssystems;
- Fig. 3: ein schematisches Blockdiagramm eines informationstechnischen Systems;
- Fig. 4: ein schematisches Blockdiagramm, das den logischen Ablauf einer Transaktion veranschaulicht und
- Fig. 5: ein schematisches Blockdiagramm, das den Austausch von Rohdaten zwischen logischen Komponenten eines informationstechnischen Systems illustriert.

Das erfindungsgemäße Transaktionssystem weist mehrere Komponenten auf, die so miteinander verbunden sind, dass eine besonders wirksame Durchführung von Transaktionen ermöglicht wird.

In den Abbildungen wird der Einsatz der Erfindung bei der Erzeugung, Verwaltung und Übermittlung von Daten eines aufwendigen Datenbanksystems dargestellt. Das Datenverarbeitungssystem enthält mehrere Vorgangsbearbeitungsmodule, die jeweils - vorzugsweise unabhängig voneinander - Daten erhalten und/oder übermitteln.

Es ist besonders vorteilhaft, die Erfindung bei einem komplexen System einzusetzen, da hier die Anzahl von zu bearbeitenden Daten mit unterschiedlichen Eigenschaften besonders hoch ist und so die positiven Effekte der Erfindung besonders gut wirken.

Es ist jedoch gleichfalls möglich, die Erfindung bei einem weniger aufwendigen System einzusetzen und auch dort die Vorteile einer wirksameren Nutzung von Netzwerkressourcen zu erzielen.

Die Erfindung eignet sich insbesondere für einen Einsatz in einem Netzwerk, welches einen oder mehrere Server beinhaltet. Ein Client initialisiert bei seinem Start einen Anwendungsrahmen. Der Client kann dabei eine Plattform mit weiteren Komponenten eines Frameworks wie Datenbanken, Abrechnungsmodule etc. nutzen. In einem besonders bevorzugten Ausführungsbeispiel der Erfindung kann eine als CARBON(Component ARchitecture for Business OptimizatioN)-Plattform bezeichnete Plattform genutzt werden, welche sowohl durch geeignete Hardware-Komponenten (zum Beispiel auf Grundlage programmierbarer elektronischer Bauelemente) als auch unter Einsatz von Software realisiert und auf Datenverarbeitungsanlagen installiert sein kann. Das Framework beinhaltet dabei die Laufzeitbibliothek der Plattform, welche auch als Common Language Runtime bezeichnet wird (CLR). Nach der Initialisierung des Anwendungsrahmens durch den Client initialisiert und startet dieser zweckmäßigerweise den Kern des Frameworks. Vor der Initialisierung des Kerns können Prüfungen durchgeführt werden, welche beispielsweise die Integrität des Programms betreffen. Ferner kann überprüft werden, ob es sich um einen Start oder einen Recovery-Fall handelt, welcher durch einen Abbruch eines Vorganges erzeugt wurde.

Das Vorgangsbearbeitungsmodul befindet sich vorzugsweise zusammen mit einer Datenkomponente auf dem Client. Dabei können zwischen die Datenkomponente und das Vorgangsbearbeitungsmodul weitere Komponenten oder Funktionseinheiten insbesondere des verwendeten Frameworks geschaltet sein, so dass es sich auch um eine indirekte Verbindung handeln kann. Die Datenkomponente ist vorzugsweise im Frontend des Computersystems angeordnet, sie kann jedoch je nach Ausbildung des Systems auch dem Backend zugeordnet werden. Das Vorgangsbearbeitungsmodul bildet elektronisch einen Vorgang oder Geschäftsprozess ab, welcher von dem Vorgangsbearbeitungsmodul abgewickelt wird. Bei den Vorgängen handelt es sich beispielsweise um Transaktionen innerhalb eines Retailsystems, welche im Bereich des Finanz-, Versicherungs-, und Logistikwesens eingesetzt werden. Ferner können auf dem Client mehrere verschiedene Versionen eines Vorgangsbearbeitungsmoduls installiert sein. Beim Starten des Vorgangsbearbeitungsmoduls wird automatisch die Version mit der höchsten Versionsnummer herangezogen. Um dies zu ermöglichen, sind die Vorgangsbearbeitungsmodule zweckmäßigerweise in einer bestimmten Weise in einem Vorgangsbearbeitungsmodul-Verzeichnis abgelegt worden.

Das Frontend bezeichnet insbesondere einen Arbeitsplatz, an dem ein Mitarbeiter Tätigkeiten ausführt. Beispielsweise nimmt der Mitarbeiter in der Filiale die Kundenwünsche entgegen und erfasst Kundendaten, Kundenwünsche und so weiter, beispielsweise mit Hilfe einer grafischen Benutzungsoberfläche, die den Mitarbeiter bei der vollständigen Eingabe aller erforderlichen Angaben unterstützt.

Das Backend bezeichnet insbesondere ein Hintergrundsystem. In dem Hintergrundsystem werden Vorgänge protokolliert und Kundendaten gespeichert. Darüber hinaus werden in dem Hintergrundsystem Daten gespiegelt und archiviert, insbesondere um die Grundsätze ordentlicher Buchführung zu verwirklichen.

Das Frontend, das Backend und die zu ihrer Verknüpfung eingesetzten Komponenten bilden in einer besonders bevorzugten Ausführungsform ein Filialsystem.

In einem bevorzugten Ausführungsbeispiel der Erfindung ist das Vorgangsbearbeitungsmodul ebenfalls an ein Framework angeschlossen, das vorzugsweise objektorientiert und komponentenorientiert ausgebildet ist. Bei dem Framework handelt es sich um ein API (Application Programming Interface), welches die Funktionalitäten bereitstellt, Clients für verschiedene Assistent-basierte Vorgangsarten zu erstellen. Die von dem Framework zur Verfügung gestellten Funktionalitäten umfassen beispielsweise Kernfunktionalitäten wie das Starten/Beenden des Clients oder der Vorgangsbearbeitungsmodule. Das Framework stellt beispielsweise ein gemeinsames Startmodul zum Starten der Vorgangsbearbeitungsmodule bereit. Ferner unterstützt das Framework die Vorgangsbearbeitungsmodule bei Datenhaltung und Ablaufsteuerung und stellt Komponenten für den Zugriff auf Daten oder zum Drucken bereit. Darüber hinaus werden Basis-funktionalitäten wie die Protokollierung oder die Fehlerbehandlung bereitgestellt.

Als vollständig objektorientierte Programmiersprache innerhalb des Frameworks kann beispielsweise C# verwendet werden. Die objektorientierte Programmierung sieht Objekt-Klasse-Beziehungen vor, wobei eine Klasse ein abstrakter Oberbegriff für Objekte ist, die eine gemeinsame Struktur und/oder ein gemeinsames Verhalten aufweisen. Ein Objekt ist dabei ein zur Laufzeit eines Programms vorhandenes Exemplar einer Klasse, für das Speicherplatz zur Verfügung gestellt wird. Ein Objekt ist eine Instanz einer Klasse. Eine Klasse und damit ihre Objekte werden durch Attribute, Operationen, Zusicherungen und Beziehungen charakterisiert, wobei die Klassen die Attribute und Methoden zu einer Einheit zusammenfassen. Die Attribute sind standardmäßig nur über Methoden der Klasse zugänglich, so dass eine Kapselung oder Zugriffsbeschränkung vorliegt. Eine Klasse kann ferner keine, eine oder mehrere explizite Schnittstellen besitzen und die Kapselung trennt die Implementierung von der Schnittstelle.

In einem besonders bevorzugten Ausführungsbeispiel der Erfindung ist das Vorgangsbearbeitungsmodul kein eigenständiges Programm, sondern benötigt zu seiner Ausführung die Infrastruktur eines Clients. Es handelt sich jedoch um eine aktive Komponente, welche beispielsweise das eigene Pausieren und/oder den Start anderer Vorgangsbearbeitungsmodule bewirken kann. Ein Pausieren erfolgt bei einem Arbeitsplatzstack vorzugsweise durch Auflegen eines zusätzlichen Layers.

Ferner können einzelne Vorgangsbearbeitungsmodule im Frontend auf dem Client angeordnet sein, während sich andere Bereiche im Backend, das heißt auf einer zentralen Serverapplikation oder in einem Umsystem befinden können.

Auf dem Computermittel sind vorzugsweise mehrere Vorgangsbearbeitungsmodule installiert, welche jeweils einen Vorgang abbilden. Die Vorgangsbearbeitungsmodule können sich dabei im Frontend oder im Backend des Computersystems befinden. Vorzugsweise sind die VORGANGSBEARBEITUNGSMODUL wie die Datenkomponente im Frontend angeordnet. Ferner ist es zweckmäßig, dass das Computersystem aus mehreren Komponenten besteht.

In einem besonders bevorzugten Ausführungsbeispiel der Erfindung handelt es sich bei dem Gesamtsystem, in welches die Vorgangsbearbeitungsmodule integriert sind, um ein stark modulares System, in welchem die Vorgänge bis auf kleinste Funktionseinheiten heruntergebrochen sind. Daher kann ein Vorgangsbearbeitungsmodul insbesondere einen Prozess abbilden, welcher Bestandteil mehrerer anderer Vorgangsbearbeitungsmodule ist. Beispielsweise kann ein Vorgangsbearbeitungsmodul das Einscannen eines Barcodes, die Erfassung von Ausweisdaten oder die Berechnung eines Wertes abbilden. Diese Einzelprozesse können als Module von anderen Vorgangsbearbeitungsmodulen aufgerufen werden, so dass sie nur einmalig implementiert werden müssen.

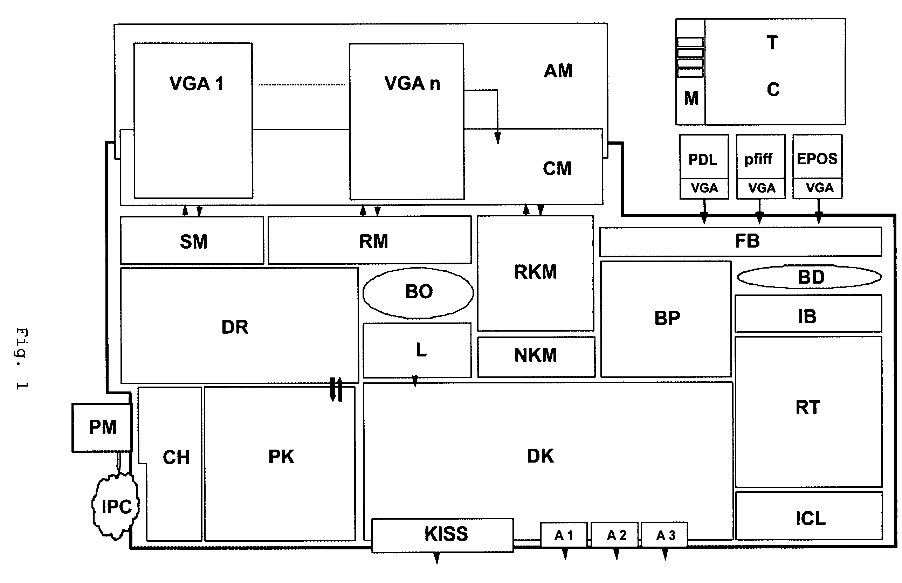

Das Computersystem umfasst wenigstens zwei Datenquellen bzw. Datensenken. Bei einer Datenquelle handelt es sich um einen Ursprungsort, von welchem Daten geliefert werden. Bei einer Datensenke handelt es sich um einen Bestimmungsort für Daten und somit um eine Empfangsstelle. Die Übernahme von Daten erfolgt üblicherweise über eine standardisierte Schnittstelle. Bei den Datenquellen und Datensenken kann es sich beispielsweise um lokale Datenbanken, servergestützte Datenbanken, Anwendungsserver oder Umsysteme handeln. Derartige Datenquellen und Datensenken werden zur Vereinfachung im Folgenden allgemein als Datensysteme bezeichnet. Die Datensysteme können sowohl im Frontend als auch im Backend angeordnet sein. In dem in Fig. 1 dargestellten Ausführungsbeispiel ist ein erstes Datensystem dem Backend BE zuzuordnen, während zwei weitere Datensysteme dem Frontend FE zuzuordnen sind.

Der Versand von Rohdaten ist eine zweckmäßige Verwendung des CARBON-Frameworks CF. Sämtliche Daten, die am Frontend erfasst werden, verschickt vorzugsweise das CARBON-Framework in Form von Rohdatensätzen an das Backend.

Ferner können als Datenverarbeitungsanlage Computer zur Steuerung von Verkaufautomaten, wie beispielsweise Briefmarkenautomaten, genutzt werden, wobei die Verkaufsautomaten vorzugsweise ebenfalls über Anzeige- und Eingabemittel verfügen, die mit dem Computer verbunden sind, welcher eine Speicher- und eine Prozessoreinheit aufweist.

Anhand der CARBON-Plattform können Transaktionen zudem über ein Netzwerk, wie beispielsweise ein lokales Netzwerk oder das Internet, abgewickelt werden. Die Plattform ist dabei auf einem Server-Computer installiert, der in einer dem Fachmann bekannten Weise über einen Client-Computer bedient wird, der in dem Netzwerk mit dem Server-Computer verbunden ist.

Zur Durchführung bzw. Bearbeitung von Prozessen enthält die CARBON-Plattform insbesondere Datenkomponenten, welche den Zugriff auf verschiedene Datenquellen und -senken steuern und zur Durchführung der Vorgänge benötigte Daten, wie beispielsweise Kundendaten bereitstellen, einen so genannten CARBON-Host, welcher Basisdienste, wie beispielsweise Druckdienste oder einen Zugriff auf Eingabegeräte wie Handscanner oder Chipkartenleser, bereitstellt, sowie Komponenten, welche die bei der Bearbeitung eines Vorgangs erfassten und verarbeiteten Daten nachgeschalteten Systemen, wie beispielsweise Buchhaltungssystemen oder Systemen zur Datenhaltung, übergeben.

Prozesse werden innerhalb der CARBON-Plattform durch Vorgänge abgebildet, denen jeweils ein Vorgangsbearbeitungsmodul zur Durchführung der Vorgänge zugeordnet ist. Der modulare Aufbau ermöglicht es dabei, Prozesse in Teilprozesse zu gliedern, die Bestandteil einer Vielzahl von Prozessen sind. Durch dieses dem Fachmann bekannte Prinzip müssen Teilprozesse nur einmal als Vorgang implementiert werden und können bei der Bearbeitung eines Gesamtprozesses aufgerufen werden, ohne dass eine Implementierung in jedem Gesamtvorgang erforderlich ist.

Bei der Bearbeitung eines Prozesses werden somit in der Regel gleichzeitig mehrere einen Teilprozess abbildende Vorgänge durchgeführt, die jeweils mittels eines Vorgangsbearbeitungsmoduls abgearbeitet werden. Zur Verwaltung der verschiedenen Vorgangsbearbeitungsmodule verfügt die CARBON-Plattform über einen Context-Manager, der insbesondere auch zum Initialisieren der Vorgangsbearbeitungsmodule verwendet wird.

Obwohl ein Zusammenwirken mehrerer der erfindungsgemäßen Komponenten besonders zweckmäßig ist, weisen bereits die einzelnen Komponenten vorteilhafte Wirkungen auf.

Nachfolgend werden besonders bevorzugte Bestandteile der Erfindung dargestellt:

### Adapterkomponente:

Die Adapterkomponente stellt als Schnittstelle eine Verbindung zwischen der Zugriffskomponente und den verschiedenen Datensystemen her. Die Adapterkomponente kapselt die Zugriffe auf die nativen Schnittstellen der unterstützten Datensysteme und ermöglicht insbesondere die Anbindung von Online- und Offline-Datensystemen. Die Adapterkomponente setzt dabei vorzugsweise direkt auf die Datensysteme oder eine verwendete Middleware auf.

Beispielsweise können entsprechende Adapter für den Zugriff auf verschiedene Datenbanken vorgesehen sein. Durch ein verwendetes Framework können als Adapter für den lokalen Datenbankzugriff beispielsweise OLEDB (Open DataBase Connectivity)-, SQL (Standard Query Language)- und EDBC (Enhanced DataBase COntainer)-Adapter zur Verfügung stehen. Vorzugsweise wird für jeden Adapter eine entsprechende Datenaktion bereitgestellt.

Die Adapterkomponente umfasst ferner entsprechende Adapter für den Online- und Offline-Zugriff auf Datensysteme. Ist beispielsweise ein Datensystem online ansprechbar, wird ein entsprechender Adapter bereitgestellt. Ist das Datensystem dagegen offline angebunden, ist ein Adapter für den Offline-Zugriff erforderlich. Für die Datenverbindung kann beispielsweise eine Middleware verwendet werden, so dass der Adapter direkt auf diese Middleware aufsetzt. Ist ein Datensystem des Backends, wie in Fig. 1 dargestellt, über eine Benachrichtigungskomponente KISS mit dem Frontend verknüpft, wird für den Zugriff auf dieses Datensystem ebenfalls ein eigener Adapter in der Adapterkomponente bereitgestellt. Dabei kann ebenfalls eine Middleware verwendet werden.

### Application Manager AM

Der Application Manager erstellt und initialisiert im Verlauf des Systemstarts alle Objekte, die für den Betrieb von CARBON notwendig sind. Außerdem stellt er den grafischen Anwendungsrahmen in Form eines Hauptfensters mit den jeweiligen Kontrollmechanismen zur Verfügung.

### Berechtigungsmodul BM

Das Berechtigungsmodul steuert verschiedene Berechtigungen; beispielsweise wurde eine Steuerung des Menüaufbaus in Abhängigkeit von den Berechtigungen offenbart; jedoch müsste der Begriff der Berechtigung anhand der vorgenommenen Beschreibung entsprechend den anderen Bestandteilen ausgebaut werden.

### Bibliothek (Library)

Bibliotheken beinhalten die Grundfunktionalitäten des CARBON-Frameworks. Hierbei handelt es sich z.B. um Funktionalitäten wie Logging, ErrorHandling, Zugriff auf Systeminformationen etc.

Die Funktionalitäten in einer Bibliothek benötigen nicht die Infrastruktur eines Clients. Insbesondere kann jedes entsprechend konfigurierte Programm auf die Funktionalitäten einer Bibliothek zugreifen. Bibliotheken stehen zwar vorzugsweise nicht im direkten Dialog mit dem Anwender, können jedoch durchaus Elemente enthalten, die der Benutzeroberfläche zugeordnet werden. Dies sind dann Hilfsfunktionalitäten (Anzeige von Meldungen), die durch das CARBON-Framework, den Client oder durch Vorgangsarten genutzt werden.

### Carbon

Carbon bezeichnet eine Plattform, die vorzugsweise folgende Bestandteile enthält:
● Client
● Vorgangsart
● Komponente
● Bibliothek (Library)

### Carbon Client

Der Carbon-Client startet einzelne Funktionen/Applikationen. Mehrere Carbon-Clients können nebeneinander existieren.

Als Client kann grundsätzlich jedes Programm bezeichnet werden, welches das gesamte CARBON-Framework oder auch nur Teile davon nutzt. In erster Linie sind dies Programme, deren Zweck es ist, Vorgangsarten auszuführen. Allerdings können auch andere Programme, wie der CARBON-Host, der Dienste für andere CARBON-Clients zur Verfügung stellt, als Client bezeichnet werden.

### Carbon-Framework CF

Das Carbon-Framework bündelt vorzugsweise mehrere Module. Das CARBON-Framework (kurz CARBON) ist zweckmäßigerweise ein API (Application Programming Interface), welches die Funktionalitäten bereitstellt, Clients für Assistent-basierte Vorgangsarten zu erstellen.

Die im Rahmen des CARBON-Frameworks zur Verfügung gestellten Funktionalitäten, gruppieren sich vorzugsweise in vier Aufgabengebiete:
● Kernfunktionalitäten - Starten/Beenden des Clients, Starten/Stoppen bzw. Verwalten von Vorgangsarten,
● Vorgangsartenunterstützung (Masken, Datenhaltung, Ablaufsteuerung, etc.),
● Komponenten (Zugriff auf Daten, Drucken etc.),
● Bereitstellung von Basis-Funktionalitäten (Logging, ErrorHandling etc.).

### Carbon-Host CH

Der Carbon-Host ist ein Host-Modul, das andere Module/Services aktivieren, deaktivieren oder pausieren kann.

### CARBON-Kern

Der Bereich, in dem die CARBON-Kernfunktionalitäten umgesetzt werden, wird als CARBON-Kern bezeichnet.

Der CARBON-Kern besteht vorzugsweise aus mehreren Komponenten. Beispiele für diese Komponenten sind:
Epos.Application, Carbon.Context, Carbon.Recovery und Carbon.Session.

Es ist besonders vorteilhaft, dass diese Komponenten zur Durchführung folgender Funktionen ausgestattet sind:
- Epos.Application -: Start der Anwendung, Initialisierung und Verwaltung des Anwendungsrahmens,
- Carbon.Context -: Starten/Stoppen/Verwalten von Vorgangsarten. Hosten von Services, Steuerung Backup/Recovery.
- Carbon.Recovery -: Speichern und Verwalten der Daten für das Backup/Recovery
- Carbon.Session -: Verwalten von Sessions

Der Kern stellt somit die Grundfunktionalität des CARBON-Frameworks und des Clients dar. Da das Framework vorzugsweise aus einer Anzahl von passiven Assemblies besteht, gibt es einen zentralen Einstiegspunkt, der das Framework lädt und instanziiert.

Diese Aufgabe übernimmt zweckmäßigerweise ein Client.

Die EPOS.exe definiert den Eintrittspunkt in den EPOS-Client (Klasse EPOS.EntryPoint). Es wird der ApplicationManager instanziiert, der Start des Frameworks eingeleitet und im weiteren Ablauf die Start-Vorgangsart geladen.

### Aufbau des CARBON-Kerns

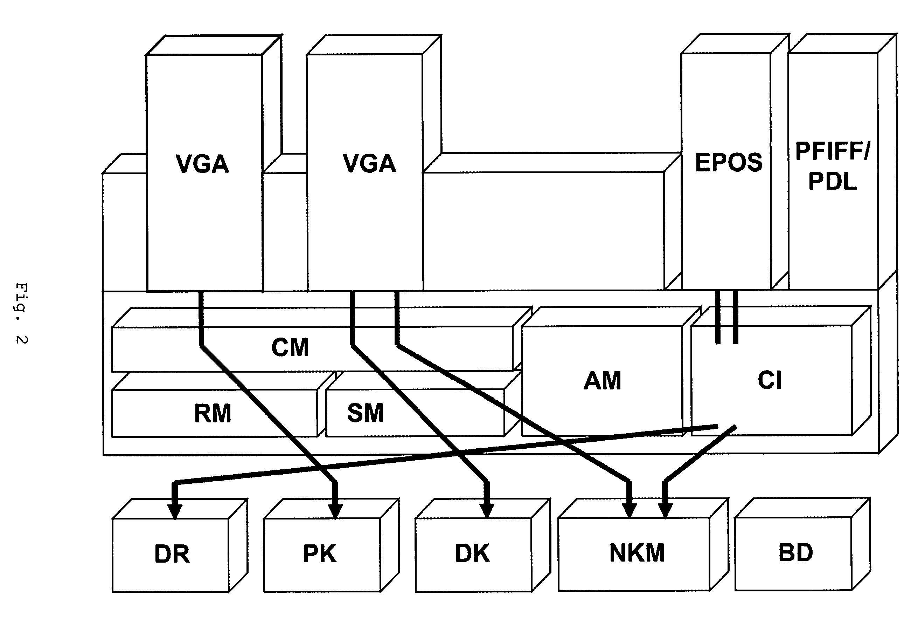

Fig. 2 zeigt den Grundaufbau des EPOS-Clients. Die mittlere Schicht spiegelt den Kern des Frameworks wider.

### CARBON-Framework

Wie in Fig. 2 erkennbar, sind die Klassen Application-Manager, Context-Manager Recovery-Manager und Session-Manager eine besonders bevorzugte zentrale Schaltstelle des Frameworks.

### CARBON-Vorgangsart

Eine Vorgangsart stellt die systemtechnische Abbildung eines Verarbeitungsprozesses dar. Im CARBON-Framework werden an der Spezifikation und Erstellung von Vorgangsarten zweckmäßigerweise Rahmenbedingungen und Konventionen geknüpft.

Eine Vorgangsart ist die elektronische Abbildung eines Geschäftsprozesses. Neben dem Benutzerinterface-Anteil, der eine Reihe von Masken umfasst, gehört zu einer Vorgangsart auch die Geschäftslogik des abgebildeten Geschäftsprozesses. Vorgangsarten sind keine eigenständigen Programme und benötigen zu ihrer Ausführung die Infrastruktur eines Clients. Sie beinhalten Elemente, die der Benutzeroberfläche zugeordnet werden (Masken) und stehen so im direkten Dialog mit dem Anwender.

Besonders bevorzugte Ausführungsformen der Vorgangsarten zeichnen sich durch das Vorhandensein eines oder mehrerer der nachfolgenden Merkmale aus:

Eine Vorgangsart sollte die zur Verfügung gestellten CARBON-Komponenten verwenden (z. B. Vorgangsart-Steuerung).

Auf einem Client kann eine Vorgangsart in mehreren Versionen vorliegen. Das CARBON-Framework spricht immer die Version mit der höchsten Nummer an.

Die Benutzeroberfläche ist in einer Vorgangsart von der Businesslogik strikt getrennt. Hierzu wird im CARBON-Framework vorzugsweise das aus dem Stand der Technik bereits bekannte MVC-Modell verwendet.

Beim MVC-Modell handelt es sich insbesondere um ein Entwurfsmuster zur Trennung von Programmeigenschaften. Das Entwurfsmuster dient zur Trennung des Programms in mehrere Einheiten, insbesondere in die drei Einheiten Datenmodell, Präsentation und Programmsteuerung. Als eindeutige Bezeichnung der Einheiten werden Model, View und Controller verwendet.

Durch den Einsatz des MVC-Modells ist ein flexibles Programmdesign erzielbar. Dies ermöglicht einfache Änderungen oder Erweiterungen. Ferner wird eine Wiederverwendbarkeit einzelner Komponenten ermöglicht.

Eine Vorgangsart besteht bei einer graphischen Darstellung in der Regel aus mehreren Masken. Die Navigation zwischen den Masken kann sowohl linear als auch nicht-linear sein.

Zur Gestaltung der Benutzeroberfläche stehen dem Vorgangsart-Programmierer GUI-Controls aus dem CARBON-Framework zur Verfügung.

Eine Vorgangsart kann aus einer anderen Vorgangsart heraus aufgerufen werden. Zwischen Vorgangsarten kann ein Datenaustausch in beide Richtungen stattfinden.

Eine Vorgangsart sollte serialisierbar sein, damit das Backup/Recovery-System des CARBON-Frameworks diese sichern kann.

Eine Vorgangsart kann Basisdienste nutzen.

### Context-Manager CM

Der Context-Manager ist das zentrale Steuerungselement und der zentrale Dienstanbieter für die Vorgangsarten. Die Ermittlung der zur Verfügung stehenden Dienste realisiert der Context-Manager durch die Abfrage der angebundenen Komponenten über die Schnittstelle ISupportServices.

### Datencontainer DC

Die Datencontainer enthalten Elemente des durchzuführenden Verarbeitungsprozesses, das heißt, der Status eines Vorgangbearbeitungsmoduls VGA spiegelt sich in den konkreten Werten auf den Elementen im Datencontainer DC wider. Die Datencontainer DC ermöglichen einen Abgleich und Rückmeldung an die Business Objekte, wenn eine Änderung von Feldinhalten auf der GUI vorgenommen wird. Der Datencontainer DC kann jederzeit mit weiteren Werten belegt werden, so dass diese validiert werden können.

Diese Erfindung sieht vor, Eingabedaten der Retail Client Nutzer in einem Datencontainer DC in Elementen abzulegen.

Die erfindungsgemäße Datenablage erhöht die Flexibilität des Systems und die Fehlersicherheit des Systems.

### Datenkomponente DK

Die Datenkomponente betrifft Datensätze, die mit einer Konfigurationsdatei verbunden sind. Die Konfigurationsdatei ermöglicht einen zentralen Zugriff auf lokal gespeicherte Daten.

In einer besonders bevorzugten Ausführungsform besteht die Datenkomponente aus einer Business-Schicht, einer technischen Verwaltungsschicht und einer technischen Adapterschicht. Die Datenkomponente steuert die Zugriffe auf lokale und im Backend angesiedelte Datenquellen. Hierzu besteht eine Schnittstelle zu KISS.

Die erfindungsgemäße Datenkomponente DK umfasst zweckmäßigerweise wenigstens eine Funktionskomponente FK, eine Zugriffskomponente ZK und eine Adapterkomponente AK.

### KISS

### Benachrichtigungskomponente KISS (Komponenten-Infrastruktur-Service)

Die Benachrichtigungskomponente ermöglicht eine Auswahl von Übertragungswegen zum Übermitteln von Benachrichtigungen.

Ferner kann die Benachrichtigungskomponente KISS zur Verknüpfung des Frontends mit dem Backend eingesetzt werden. Dazu ist sowohl das Frontend als auch das Backend mit einer geeigneten Schnittstelle ausgebildet. Die Datenübertragung innerhalb der Benachrichtigungskomponente basiert vorzugsweise auf XML oder SOAP. In einem besonders bevorzugten Ausführungsbeispiel der Erfindung kann die Verknüpfung der Computermittel des Front- und Backends über Nachrichtenwege mit unterschiedlich schnellen Verbindungen hergestellt werden. Für einen Nachrichtenweg kann beispielsweise eine Middleware eingesetzt werden.

Eine besonders bevorzugte Ausführungsform der Benachrichtigungskomponente zeichnet sich dadurch aus, dass es mehrere (beispielsweise drei) Möglichkeiten gibt, Daten zu versenden (Remote; Offline-Weg; Online-Anfrage) und dass KISS eine Optimierung des Übertragungsweges vornimmt. Hierdurch werden erhebliche Übertragungskosten gespart. Dies geschieht auch dadurch, dass bei der Online-Anfrage auch für den Offline-Weg bestimmte Daten "mitgenommen" werden.

Zweckmäßigerweise wird die Benachrichtigungskomponente so ausgestaltet, dass sie ein Auswahlmittel zur Auswahl eines Übertragungskanals mit einer für den jeweiligen Übertragungszweck geeigneten Datenrate enthält.

Eine zweckmäßige Weiterbildung der Benachrichtigungskomponente KISS beinhaltet das "Mitnehmen" von Daten niedrigerer Priorität bei einem für eine Übertragung von Daten höherer Priorität bereits geöffneten Übertragungskanal.

Ein besonderer Vorteil der dargestellten Benachrichtigungskomponente KISS ist, dass andere Komponenten der Zielarchitektur die Funktionalität von KISS unabhängig von der internen Funktionsweise von KISS nutzen können.

### Komponente

Eine Komponente ist eine Sammlung von Funktionalitäten, die vorzugsweise als separate programmtechnische Einheit gefasst ist. Komponenten können durch den CARBON-Kern, Vorgangsarten und durch andere Komponenten verwendet werden, um bestimmte Aufgaben (Bsp.: Verwalten von Kundendaten) durchzuführen. Ziel bei der Verwendung von Komponenten ist es, die redundante Entwicklung von Funktionalitäten zu vermeiden, in dem mehrere Vorgangsarten auf die gleiche Komponente zugreifen können.

Komponenten sind keine eigenständigen Programme und benötigen zu ihrer Ausführung die Infrastruktur eines Clients. Vorzugsweise enthält eine Komponente keine Elemente, die der Benutzeroberfläche zugeordnet werden. Komponenten stehen vorzugsweise nicht im direkten Dialog mit dem Anwender, sondern werden über Vorgangsarten oder andere Komponenten aufgerufen.

Eine CARBON-Komponente ist eine Einheit, die neben ihren eigentlichen Funktionalitäten eine Komponenten-Factory enthält. Diese Factory
● liefert Informationen über die Komponente;
● ermöglicht es, eine Konsistenz- und Vorbedingungsprüfung durchzuführen;
● liefert Objektinstanzen eines angeforderten Typs;

Durch diesen Aufbau ist es möglich, auf einheitlichem Wege Objektinstanzen zu erstellen. Da in der Regel ein Interface von der Factory angefordert wird, kann die Klasse, von der eine Instanz generiert wird, problemlos geändert oder ausgetauscht werden.

Komponenten werden von Vorgangsbearbeitungsmodulen, dem CARBON-Kern oder anderen Komponenten verwendet. Bibliotheken verwenden vorzugsweise keine Komponenten.

Um die Backendfähigkeit von CARBON zu gewährleisten, sollten die CARBON-Komponenten stateless sein. Sie können in einem zentralen Datenspeicher abgelegt werden, müssen dieses aber nicht.

Die Factory ermöglicht es, die Bedingungen zu überprüfen, die zur Benutzung der Komponente erfüllt sein müssen, ohne dafür Instanzen der Klassen der Komponente erzeugen zu müssen. Hierfür sind Methoden zur Konsistenz- bzw. zur Vorbedingungsprüfung zu implementieren.

### Konfigurationsdatei

Erfindungsgemäß ist eine Konfigurationsdatei in die Funktionskomponente einlesbar, wobei die Konfigurationsdatei fachliche Informationen für die Zugriffe auf die Datensysteme enthält.

Die Konfigurationsdatei liegt vorzugsweise im XML-Format vor und initiiert eine Klasse *DataService* zur Kapselung aller Datenzugriffe. Die Funktionskomponente bildet die fachlichen Inhalte der Vorgangsbearbeitungsmodule ab, wobei beispielsweise in der Konfigurationsdatei hinterlegt ist, in welcher Datenquelle vom Vorgangsbearbeitungsmodul benötigte Daten gespeichert sind oder in welcher Datensenke durch das Vorgangsbearbeitungsmodul erfasste Daten hinterlegt werden. Ferner erfolgt die Validierung von Eingabe- und Ausgabewerten durch die Funktionskomponente. Auch die Zusammenführung von Daten aus mehreren Datensystemen wird durch die Funktionskomponente durchgeführt. Technische Details für den Zugriff auf die Datensysteme sind in der Funktionskomponente vorzugsweise nicht enthalten.

### Middleware

Bei der Middleware handelt es sich um eine anwendungsunabhängige Komponente, welche Dienstleistungen zur Vermittlung zwischen Anwendungen anbietet. Eine Middleware stellt eine Ebene in einem komplexen Software-System dar, die als Dienstleister anderen ansonsten entkoppelten Softwarekomponenten die Kommunikation untereinander ermöglicht.

Model View Controller

Der Model View Controller sorgt für die Trennung von Benutzeroberfläche, Daten und Prozessen.

### Peripherie-Komponente

Über die Peripherie-Komponente steuert CARBON die Peripherie direkt an. Eine eigens programmierte Schnittstelle ermöglicht den Anschluss eines jeden Geräts, das die von CARBON vorgegebenen Eigenschaften enthält.

### Recovery-Manager RM

Der Recovery-Manager speichert den Stand des Clients in regelmäßigen Abständen und stellt ihn im Bedarfsfall wieder her.

### Rohdatenkomponente

Mit Hilfe der Rohdatenkomponente erzeugt die Vorgangsart Rohdatensätze. Der Context-Manager dient als Mittler, er gibt die Dienste der Rohdatenkomponente über eine Schnittstelle an die Vorgangsart weiter.

### Zugriffskomponente

Die Zugriffskomponente der Datenkomponente enthält die technischen Informationen zu Aktionen auf den Datensystemen und stellt eine technische Verwaltungsschicht dar. Sie enthält die Logik zur Erzeugung und Parametrisierung von technischen Zugriffen auf die Datensysteme, jedoch vorzugsweise keine fachliche Logik. Der Zugriff auf die Datensysteme erfolgt zweckmäßigerweise über Schnittstellen in Form von Datenaktionen und über technische Adapterklassen.

Die Zugriffskomponente wird vorzugsweise als abstrakte Klasse DataService ausgeführt. Sie fungiert als Factory für alle Datenaktionen. Eine Datenaktion wird durch eine Klasse implementiert, die ein IDataAction-Interface implementiert. Jede als Datenaktion fungierende Klasse muss das IDataAction-Interface implementieren. Über dieses IDataAction-Interface werden alle lokalen und servergestützten Datenzugriffe durchgeführt. Das IDataAction-Interface realisiert vorzugsweise alle allgemeinen Datenoperationen wie Lesen, Schreiben und Manipulieren. Vorzugsweise ist eine erste IDataAction für Serverzugriffe und eine zweite IDataAction für Datenbankzugriffe vorgesehen.

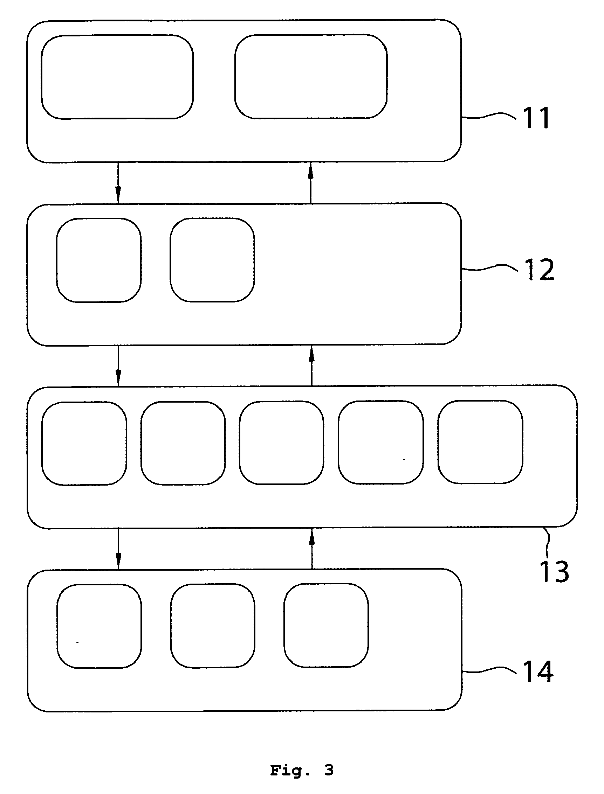

Fig. 3 zeigt ein schematisches Blockdiagramm eines informationstechnischen Transaktionssystems. Diese Struktur ist der Übersichtlichkeit halber auf eine einzige Transaktionsstelle beschränkt, lässt sich aber von einem Fachmann ohne weiteres auf ein System mit vielen Transaktionsstellen übertragen. In der Transaktionsstelle ist jeder einzelnen in der Transaktionsstelle angebotenen Dienstleistung eine Transaktionsart zugeordnet, für die eine programmtechnische Entsprechung in dem IT-System vorgesehen ist. Ein Beispiel für eine derartige Transaktionsstelle ist eine Filiale eines Filialsystems.

Die Erfindung eignet sich für einen Einsatz in aufwändigen Produktionssystemen, beispielsweise der Just-in-Time-Herstellung von Fahrzeugen oder anderer Produktionsgüter mit einer Vielzahl produktionstechnisch zu berücksichtigender Eigenschaften, insbesondere auf Grundlage individualisierter Anforderungen ebenso wie in anderen Einsatzgebieten.

Nachfolgend wird beispielhaft ein Einsatz der Erfindung in einem weit verzweigten Filialsystem dargestellt. Das Filialsystem ermöglicht Kunden einen flächendeckenden Zugang zu den Waren oder Dienstleistungen eines Unternehmens. Beispielhaft werden an dieser Stelle Verkehrsunternehmen genannt, die ihren Kunden an zahlreichen Bahnhöfen und Flughäfen ihre Serviceleistungen anbieten. Hierzu gehören beispielsweise der Verkauf von Bahn- oder Flugkarten, die Annahme von Gepäck oder das Mieten von Kraftfahrzeugen. Ein anderes Beispiel sind Postunternehmen, die in fast jedem Ort in einem Land den Kunden eine umfangreiche Auswahl von Postdienstleistungen zur Verfügung stellen, wie zum Beispiel die Annahme von Briefen und Paketen, der Verkauf von Postwertzeichen sowie eine ganze Palette von Bankdienstleistungen, wozu insbesondere die Rückzahlung von Bargeld von einem Konto, die Annahme von Bareinzahlungen und vieles mehr gehörten.

Diese Beispiele zeigen, dass in jeder der zahlreichen Filialen ein vielfältiges Angebot von Verkaufs- und Beratungsdienstleistungen bereitgehalten wird. Es ist jedoch gleichfalls möglich, die dargestellten Beispiele in anderen Transaktionssystemen entsprechend einzusetzen. Nachfolgend wird die Erfindung ohne Beschränkung der Allgemeingültigkeit am Beispiel eines Postunternehmens dargestellt. Konkret bedeutet dies zum Beispiel beim Abheben von Bargeld von einem Konto in einer Postfiliale, dass der Kunde durch das Einlesen von Daten von einer Kundenkarte identifiziert und gleichzeitig der Kontostand seines Bankkontos überprüft wird. Der Mitarbeiter in der Postfiliale wird sodann über das informationstechnische System (IT-System) darüber informiert, ob er eine Auszahlung vornehmen darf oder nicht. In dem anderen eingangs genannten Beispiel, nämlich dem Verkauf von Bahn- oder Flugkarten, wird ein Kunde ebenfalls mit Hilfe seiner Kundenkarte identifiziert und die verkaufte Bahn- oder Flugkarte wird bereits beim Kauf der Fahrkarte in einem Bonusprogramm der entsprechenden Gesellschaft durch Hinzufügen einer bestimmten Anzahl von Bonuspunkten berücksichtigt. Bereits aus diesen wenigen Beispielen wird klar, dass die Abbildung von Transaktionen in einem Filialsystem einen recht hohen informationstechnischen Aufwand erfordert. In der Regel erfordern selbst relativ einfache Geschäftsvorgänge, dass mehrere unterschiedliche Arten von Daten zwischen einer Filiale und einer zentralen Datenbank oder einem Zentralrechner ausgetauscht werden müssen.

Die Erfindung lässt sich sowohl in automatisierten Systemen als auch in EDV-unterstützten konventionellen Filialsystemen einsetzen.

Bei einem Einsatz in einem weitgehend automatisierten System ist es insbesondere vorteilhaft, Softwareagenten einzusetzen, die automatisierte Bearbeitungsroutinen durchführen können.

Die Erfindung ist jedoch nicht auf diese besonders bevorzugte vollautomatisierte Ausführungsform beschränkt, sondern lässt sich gleichfalls in einer einzelne Prozesse automatisiert durchführenden Gesamtumgebung auch ohne Softwareagenten implementieren.

Ein Beispiel einer derartigen filialgestützten Umsetzung wird nachfolgend dargestellt.

Der Mitarbeiter in der Transaktionsstelle nimmt die Kundenwünsche entgegen und erfasst weitere Kundendaten, beispielsweise mit Hilfe einer grafischen Benutzungsoberfläche, die den Mitarbeiter bei der vollständigen Eingabe aller erforderlichen Angaben unterstützt. Der Arbeitsplatz, an dem der Mitarbeiter diese Tätigkeiten ausführt, ist das Frontend. Die auf diese Weise erfassten Kundenwünsche und Kundendaten werden zu einer tiefer liegenden Komponenten Infrastrukturschicht 12 des IT-Systems weitergegeben. Die Infrastrukturschicht 12 kümmert sich eigenständig um die Steuerung von peripheren Komponenten, ohne dass der Mitarbeiter in die Abläufe eingreifen müsste. Zum Beispiel werden Druckaufträge automatisch an einen Fahrschein- oder Belegdrucker weitergeleitet, oder eine automatische Kasse wird zur Ausgabe eines bestimmten Geldbetrages veranlasst. Alle diese Vorgänge werden in einem Hintergrundsystem 13 protokolliert, und Kundendaten werden gespeichert. Darüber hinaus werden in dem Hintergrundsystem 13, das auch als Filial-Backend bezeichnet wird, Daten gespiegelt und archiviert, um die Grundsätze ordentlicher Buchführung zu verwirklichen. Das Frontend 11, die Infrastrukturschicht 12 und das Filial-Backend 13 bilden ein Transaktionssystem.

Schließlich ist es für einige Transaktionen erforderlich, dass das Transaktionssystem Daten mit anderen Systemen austauscht, zum Beispiel mit der Datenbank eines Bankrechners, um festzustellen, ob eine von einem Kunden gewünschte Barauszahlung auf seinem Konto überhaupt gedeckt ist oder ob ein gewünschtes Produkt ausgeliefert werden kann. Solche Systeme außerhalb einer Transaktionsstelle werden auch als Umsysteme 14 bezeichnet. Die Übertragung einer solchen Abfrage wird ebenfalls von dem Filial-Backend 13 ohne Eingriffe des Mitarbeiters selbsttätig ausgeführt. Werden Daten von den Umsystemen 14 zurück übertragen, werden sie von dem Filial-Backend 13, der Infrastrukturschicht 12 bis zum Frontend 11 des Mitarbeiters übertragen, damit dieser dem Inhalt der Daten entsprechend aktiv wird. In dem vorliegenden Beispiel würde er also den gewünschten Geldbetrag auszahlen oder nicht. Der Datenaustausch zwischen den einzelnen Schichten des Transaktionssystems und den Umsystemen 14 sind in Fig. 3 durch Pfeile angedeutet.

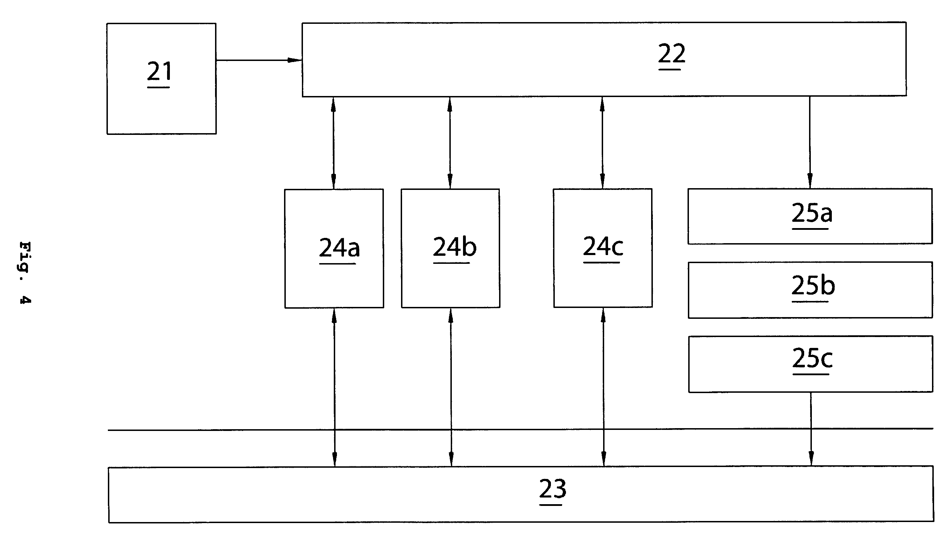

In Fig. 4 ist der logische Aufbau einer Transaktion dargestellt. Eine Transaktion beginnt mit einem Stammdatensatz 21, der im Laufe der Bearbeitung der Transaktion in der Transaktionsstelle durch Eingabe von Daten beziehungsweise durch im Transaktionssystem vorhandene Daten Schritt für Schritt ergänzt wird. Hierbei findet beständig ein Datenaustausch zwischen der als Block 22 veranschaulichten Transaktion und dem als Block 23 illustrierten Transaktionssystem statt. Der Austausch von Datensätzen zwischen der Transaktion und dem Transaktionssystem ist in Fig. 4 durch Blöcke 24a, 24b und 24c illustriert. Die Gesamtheit der Daten wird am Ende der Transaktion zu Rohdatensätzen 25a, 25b, 25c kombiniert, deren Struktur im Folgenden noch näher beschrieben werden wird. Auch in Fig. 4 sind die Datenströme durch Pfeile angedeutet.

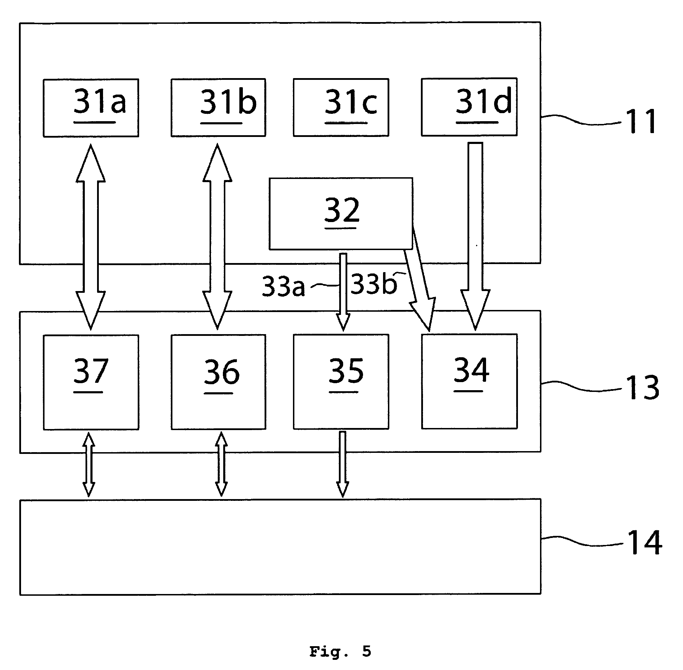

In Fig. 5 ist in einem schematischen Blockdiagramm der logische Ablauf von dem Austausch von Rohdaten zwischen den einzelnen Schichten des Gesamtsystems gezeigt. In Fig. 5 sind zur beispielhaften Veranschaulichung vier Datenblöcke 31a, 31b, 31c und 31d dargestellt. Jeder der Datenblöcke 31a bis 31d enthält applikationsspezifische Datenstrukturen als Basis für Rohdaten. Es wird bemerkt, dass es sich bei diesen Datenstrukturen jedoch nicht um Rohdaten handelt. Erst ein Rohdatenmodul 32 transformiert die applikationsspezifischen Datenstrukturen aus dem Datenblock 31c in Rohdaten. Das Rohdatenmodul 32 führt somit einen Datentransformationsprozess aus. In einem Transformationsschritt, der durch zwei Pfeile 33a und 33b veranschaulicht ist, werden die Rohdatensätze von dem Frontend 11 zu dem Filial-Backend 12 übertragen und dort sowohl in einem Archivspeicher 34 als auch in einer Rohdatenservicekomponente 35 gespeichert. Die Rohdatenservicekomponente 35 überträgt die Rohdaten an die Umsysteme 14, wenn dies für eine bestimmte Transaktion erforderlich sein sollte. Zur Durchführung der Grundsätze ordentlicher Buchführung werden auch die applikationsspezifischen Daten einer Transaktion abgespeichert. Die Datenblöcke 31a und 31b repräsentieren Interaktions- und Prozessdaten, die nicht in Rohdaten umgewandelt, sondern unverändert in eigens dafür vorgesehene Servicekomponenten 36 und 37 übertragen werden. Die Servicekomponenten 36 und 37 sorgen auch für den Austausch der Interaktions- und Prozessdaten zwischen dem Filial-Backend 13 und den Umsystemen 14.

Die einheitliche Erfassung und Bearbeitung von Daten, die für einzelne Transaktionen relevant sind, im Rahmen einer einheitlichen Rohdatenstruktur hat den Vorteil, dass neue Transaktionsarten sehr leicht in eine bestehende Infrastruktur integrierbar sind, weil durch die vereinheitlichte Datenstruktur die Kompatibilität sichergestellt ist.

Die Schemata, die das in Fig. 4 dargestellte Rohdatenmodell bilden, werden als reiche Schemata bezeichnet. Sie beinhalten keine spezifischen Eigenschaften des Frontends, mit dem ein Rohdatensatz erzeugt wird. Die reichen Schemata bilden die Obermenge aller möglichen Rohdaten, die mit unterschiedlichen Frontends erzeugt werden. Die erzeugenden und/oder verarbeitenden Systeme können Spezialisierungen der reichen Schemata definieren und verwenden. Die Spezialisierungen der reichen Schemata können zur Abbildung der eigenen, im Vergleich zu den reichen Schemata spezielleren Datenanforderungen sinnvoll sein und werden als arme Schemata bezeichnet. Der Vorteil dieses Konzepts besteht darin, dass die armen Schemata auf Basis der zugehörigen reichen Schemata automatisch überprüfbar und als deren Spezialisierung definierbar sind. Hierbei ist zu beachten, dass ein armes Schema eindeutig einem reichen Schema zugeordnet sein muss. Alle Pflichtelemente des reichen Schemas müssen auch Bestandteile des armen Schemas sein. Allerdings kann das arme Schema weniger Unterstrukturen, weniger Elemente und so weiter im Vergleich zu dem reichen Schema aufweisen. Ein armes Schema im Vergleich zu dem zugehörigen reichen Schema kann auch Beschränkungen der Elemente hinsichtlich ihrer Länge und Ausprägungen aufweisen. Umgekehrt gilt dies jedoch nicht.

Bei der Gestaltung der Struktur des Rohdatensatzes ist berücksichtigt worden, dass die Elemente eines Rohdatensatzes die kleinste fachlich-logische Einheit einer Transaktion bilden. Die kleinste fachliche Einheit ist die Menge aller fachlich zusammengehörenden Elemente einer Transaktion, die eine sinnvolle Verarbeitung in allen beteiligten Systemen ermöglicht, nämlich dem Frontend 11, dem Filial-Backend 13 und den Umsystemen 14. Es ist allerdings auch möglich, dass mehrere Rohdatensätze gemeinsam eine fachliche Einheit abbilden. In diesem Fall bildet nur die Gesamtheit aller Rohdatensätze eine bestimmte Transaktion vollständig ab. Um die erforderliche Datenmenge möglichst gering zu halten, besteht in diesem Fall zwischen den Rohdatensätzen keine Redundanz. Das bedeutet, die Rohdatensätze sind disjunkt.

Die Datenströme der Transaktionssysteme lassen sich, angelehnt an die Struktur des IT-Systems, in Rohdaten und Nichtrohdaten unterscheiden. Nichtrohdaten sind zum Beispiel Daten, die bei der Kommunikation mit dem Prozessservice relevant sind. Rohdaten und Nichtrohdaten werden getrennt voneinander archiviert, wie dies zum Beispiel aus Fig. 5 ersichtlich ist.

### Bezugszeichenliste:

- ABK: Auftragsbearbeitungskomponente
- AM: Applikation-Manager
- BM: Berechtigungsmodul
- CF: Carbon Framework
- CH: Carbon Host
- CM: Context-Manager
- DC: Datencontainer
- DK: Daten-Komponente
- DKM: Datenkomponentenmodul
- KISS: Benachrichtigungskomponente
- ISS: ISupport-Service
- RDM: Rohdatenmodul
- RM: Recovery-Manager
- RKM: Rohdatenkomponentenmodul
- RM: Recovery-Manager
- SM: Session-Manager
- VGA: Vorgangsbearbeitungsmodul

## Patentansprüche

1. Transaktionssystem zum Verarbeiten von Transaktionsinformationen von wenigstens einem Leistungserbringer mit einem Mittel zum Erfassen von Abrechnungsdaten,
**dadurch gekennzeichnet,**
**dass** das Transaktionssystem wenigstens ein Vorgangsbearbeitungsmodul (VGA) enthält, wobei das Vorgangsbearbeitungsmodul einen Datencontainer enthält, in dem die Abrechnungsdaten gespeichert werden und dass das Vorgangsbearbeitungsmodul (VGA) über eine Schnittstelle mit wenigstens einem Datenmodul verbunden ist.

2. Transaktionssystem nach Anspruch 1,
**dadurch gekennzeichnet,**
**dass** das Datenmodul ein Rohdatenmodul (RDM) ist.

3. Transaktionssystem nach einem oder beiden der Ansprüche 1 oder 2,
**dadurch gekennzeichnet,**
**dass** das Datenmodul eine Datenkomponente enthält.

4. Transaktionssystem nach einem oder mehreren der vorangegangenen Ansprüche,
**dadurch gekennzeichnet,**
**dass** es ein Steuerungsmodul enthält, das so ausgestaltet ist, dass es den Datencontainer aktivieren und/oder deaktivieren kann.

5. Transaktionssystem nach einem oder mehreren der vorangegangenen Ansprüche,
**dadurch gekennzeichnet,**
**dass** es einen Context-Manager (CM) enthält, wobei der Context-Manager so ausgestaltet ist, dass er eine Aktivierung und/oder eine Deaktivierung des Vorgangsbearbeitungsmoduls (VGA) vornehmen kann.

6. Transaktionssystem nach Anspruch 5,
**dadurch gekennzeichnet,**
**dass** der Context-Manager (CM) so ausgestaltet ist, dass er mehrere Vorgangsbearbeitungsmodule (VGA) unabhängig voneinander aktivieren und/oder deaktivieren kann.

7. Transaktionssystem nach einem oder mehreren der Ansprüche 4 bis 6,
**dadurch gekennzeichnet,**
**dass** der Context-Manager (CM) als Steuerungsmodul ausgebildet ist.
